# EUROPEAN PATENT SPECIFICATION

(11) **EP 0 427 008 B1**
(45) Date of publication and mention of the grant of the patent: **30.07.1997**
(21) Application number: 90119740.0
(22) Date of filing: 15.10.1990
(51) Int. Cl.: G11B 5/53, G11B 15/12, G11B 5/49

(54) **Rotating magnetic head assembly**
Rotierender Magnetkopf-Zusammenbau
Assemblage de tête magnétique rotative

(30) Priority: 10.11.1989 JP 293341/89; 15.03.1990 JP 64857/90
(43) Date of publication of application: 15.05.1991
(73) Proprietor: MITSUBISHI DENKI KABUSHIKI KAISHA, Chiyoda-ku Tokyo (JP)
(72) Inventor: Mitsuhashi, Yasuo, c/o Mitsubishi Denki K. K., Nagaokakyo-shi, Kyoto (JP)
(74) Representative: Pellmann, Hans-Bernd, Dipl.-Ing.

(56) References cited:
- GB-A- 2 046 498
- PATENT ABSTRACTS OF JAPAN vol. 10, no. 266 (P-496)(2322) 11 September 1986
- PATENT ABSTRACTS OF JAPAN vol. 10, no. 111 (P-451)(2168) 25 April 1986
- PATENT ABSTRACTS OF JAPAN vol. 13, no. 228 (P-877)26 May 1989
- PATENT ABSTRACTS OF JAPAN vol. 9, no. 129 (P-361)(1852) 5 June 1985
- PATENT ABSTRACTS OF JAPAN vol. 10, no. 266 (P-496)(2322) 11 September 1986
- JP6190306

## Description

The present invention relates to a rotating magnetic head assembly for use in a magnetic recording and reproducing apparatus such as a video tape recorder (VTR).

A rotating magnetic head assembly comprising the features indicated in the preamble of claim 1 is known from JP-61-90307.

JP-61-90306 describes a recording or reproducing device having the same head switch-over circuit means as the one shown in JP-61-90307.

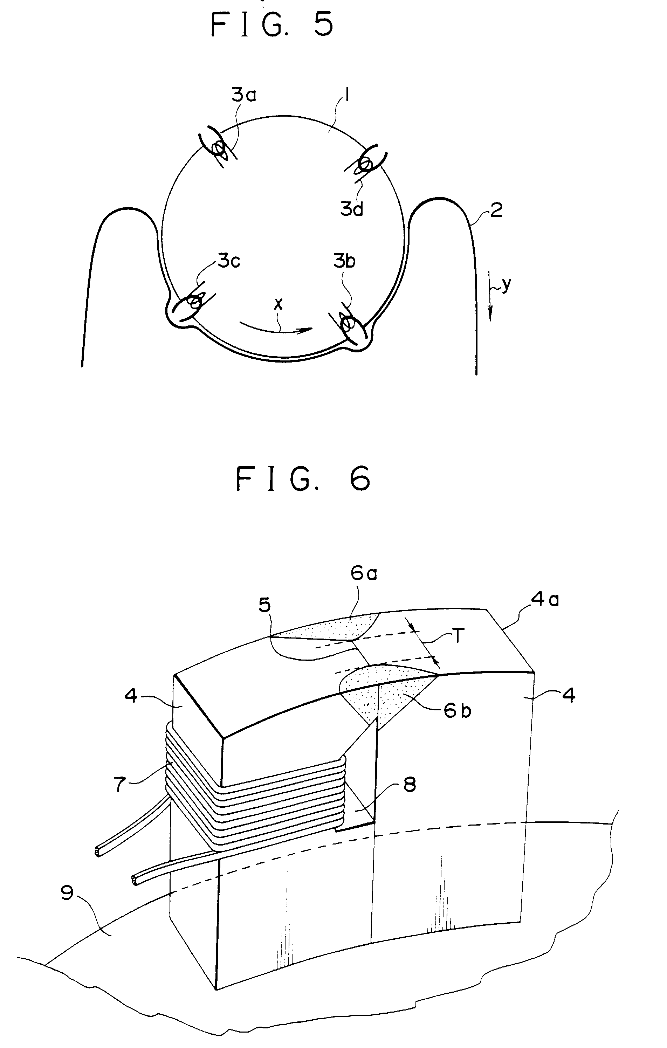

A magnetic head assembly of an independent four-head type used in a conventional VTR is shown in Figs. 5 and 6. Fig. 5 schematically illustrates a configuration of the magnetic head assembly. In this drawing, a rotating drum 1 generally rotates in the direction of x at a speed of 1,800 r.p.m. A magnetic tape 2 is a magnetic recording medium generally having a thickness of 19 µm and is adapted to travel in the direction of y at a speed of 3.335 cm/sec. (in the case of the VHS system) in a state in which it is wrapped near a half revolution around the rotating drum 1 at the time of recording or reproduction.

Rotating video heads 3a, 3b for the standard-speed mode are located on a peripheral surface of the rotating drum 1 at precisely mutually opposed positions about its axis. In the VHS system, the video track width for the standard-speed mode is 58 µm, and the rotating video heads 3a, 3b are therefore designed to have track widths of 58 µm. The rotating video heads 3a, 3b have azimuth angles of +6° and-6°, respectively.

Rotating video heads 3c, 3d for the triple-speed mode have track widths of 19 µm (in the VHS system the video track width for the triple-speed mode is 58/3 = 19 µm) and have azimuth angles of +6° and -6°, respectively.

Fig. 6 is a perspective view illustrating a specific arrangement of one of the rotating video heads 3a, 3b, 3c, 3d.

A head chip 4 is typically formed of single crystal ferrite and has a sliding surface 4a which is brought into contact with the magnetic tape 2. A head gap 5 is formed by joining two head chips 4, and its width, i.e., a head width, is given by T (µm).

Glass members 6a, 6b are designed to reinforce the joining of portions of the head chips 4, 4 at the head gap 5 and function as an adhesive agent.

A winding 7 is arranged such that a copper wire having a diameter of several dozens µm is wound a number of turns around a portion of one of the head chips 4, 4. A recording current flows across this winding during recording. This recording current generates magnetic flux at the head gap 5, and the magnetic tape 2 is magnetized by this magnetic flux. During reproduction, on the other hand, the magnetized energy of the magnetic tape 2 is picked up by the head gap 5 as magnetic flux, and a current is induced in the winding 7 by means of this magnetic flux. That is, the winding 7 serves to fetch, in the form of a current, information magnetically recorded on the magnetic tape 2.

A window 8 is used for allowing the wire of the winding 7 to be threaded therethrough, while a head base 9 is used for fixing the head chips 4, 4 thereon and is generally formed of brass which is a nonmagnetic material.

Of the rotating video heads thus arranged, those having a head width T of 58 µm are disposed at predetermined positions on a peripheral surface of the rotating drum 1 as the heads 3a, 3b for the standard-speed mode. At this time, an arrangement is provided such that the sliding surface 4a faces the outer side as viewed from the rotating drum 1. In addition, those having a head width T of 58/3 µm are disposed at predetermined positions on a peripheral surface of the drum 1 as the heads 3c, 3d for the triple-speed mode. The positions of these heads 3a, 3b, 3c, 3d have already been mentioned above.

During magnetic recording and reproduction using the magnetic tape 2 in the apparatus thus arranged, in the standard-speed mode, the heads 3a, 3b are operative, but the heads 3c, 3d remain inoperative and are only brought into sliding contact with the magnetic tape 2 as the rotating drum 1 rotates. In the triple-speed mode, however, only the heads 3c, 3d are conversely made operative.

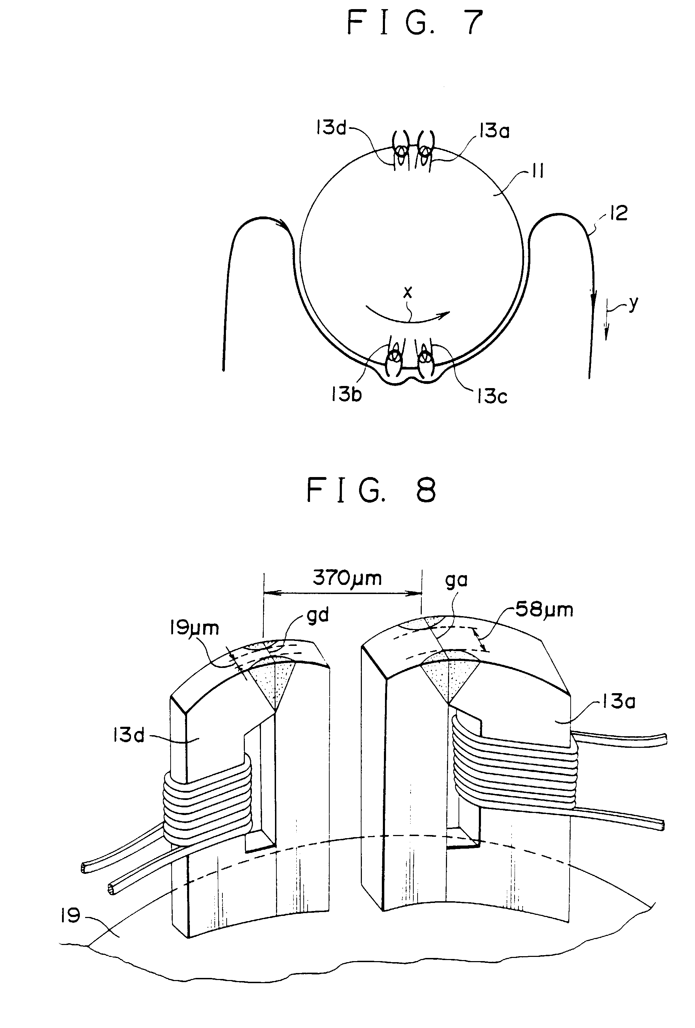

Rotating video heads which are referred to as a composite four-head type are shown in Figs. 7 and 8.

As shown in Fig. 8, a recording/reproducing head 13a for the standard-speed mode having a track width of 58 µm and a recording/reproducing head 13d for the triple-speed mode having a track width of 19µm are fixed to a head base 19 at a gap-to-gap distance of 1H (370 µm). These heads are arranged on a peripheral surface of a rotating drum 11, as shown in Fig. 7. Heads 13b, 13c having a similar arrangement are provided on the opposite side of the rotating drum 11 as viewed from the direction of the axis of the rotating drum 11.

In this example as well, during recording and reproduction in the standard-speed mode, only the heads 13a, 13b are operative, and the heads 13c, 13d remain inoperative. During recording and reproduction in the triple-speed mode, the heads 13c, 13d are operative and the heads 13a, 13b remain inoperative.

In the case of the composite four-head type, no same azimuth angle (+6°) is selected for the heads 13a, 13d, and the same azimuth angle (-6°) is selected for the heads 13b, 13d. As a result, it is possible to effect a still motion (reproduction of a still picture with the tape stopped) by using the two heads 13a, 13c.

In other words, if reproduction is effected on a single recorded video track by means of the two heads 13a, 13c having the same azimuth angle (+6°) and having different head widths (58 µm for the head 13a, and 19 µm for the head 13c), it is possible to easily reproduce a still picture which is free of blurring. For this reason, this composite four-head type is widely adopted for home VTRs.

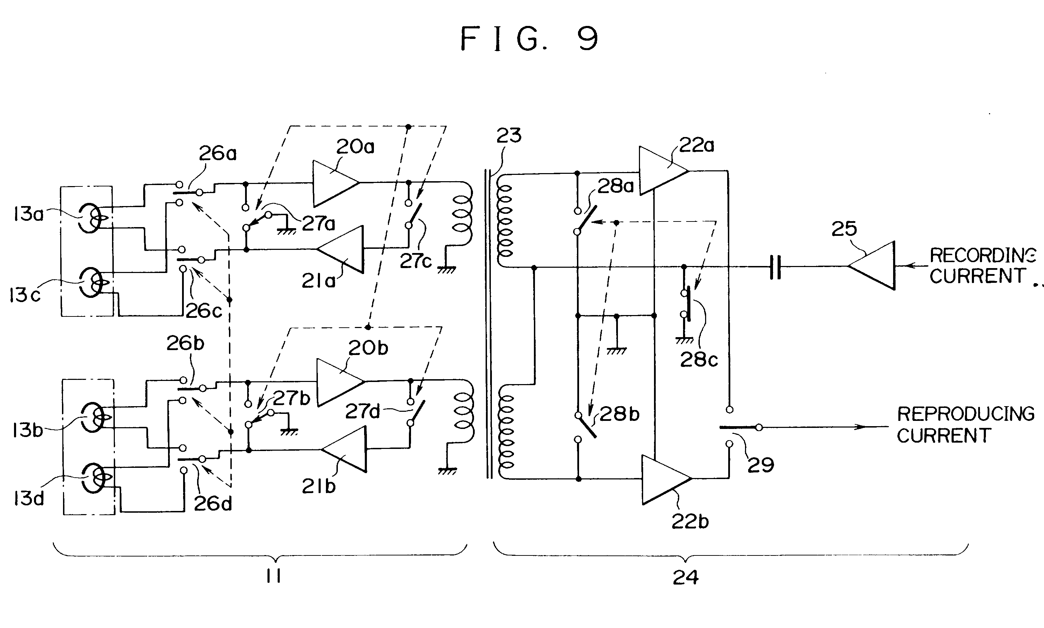

Fig. 9 is a diagram illustrating a driving circuit for the aforementioned heads 13a, 13b, 13c, 13d.

In the drawing, a reproducing head amplifier 20a amplifies an output of either one of the head 13a for the standard-speed mode and the head 13c for the triple-speed mode, and a recording amplifier 21a amplifies a recording current to be supplied to the head 13a or 13c. A reproducing head amplifier 20b and a recording amplifier 21b are provided in correspondence with the head 13b for the standard-speed mode and the head 13d for the triple-speed mode. The circuitry including these components is provided In the rotating drum 11.

Reproducing amplifiers 22a, 22b amplify reproducing currents for the fields covered by the heads 13a, 13c and the heads 13b, 13d, respectively, and these reproducing amplifiers 22a, 22b are provided in a fixed drum 24. A recording amplifier 25 is provided in the fixed drum 24 and is adapted to amplify a recording current and supply it to the recording amplifiers 21a, 21b. The reproducing amplifiers 22a, 22b and the recording amplifier 25 are connected to internal circuits of the rotating drum 11 via a rotary transformer 23.

Switches 26a, 26b, 26c, 26d are used to switch over the respective heads 13a, 13b, 13c, 13d and connect them to the amplifiers 20a, 21a, 20b, 21b in correspondence with the standard-speed mode and the triple-speed mode. Switches 27a, 27b, 27c, 27d are used to switch over the recording and reproduction modes and are disposed in the rotating drum 11.

Switches 28a, 28b, 28c are changed over in correspondence with the recording and reproduction modes and are disposed in the fixed drum 24. A field switch 29 switches a reproducing current from the amplifier 22a or 22b for each 1/60 second and outputs the same.

Referring now to Fig. 9, a description will be given of the switching operation of the switches in each operation mode.

At the time of recording in the standard-speed mode, the switches 26a, 26b, 26c, 26d are changed over and set in such a manner as to connect the heads 13a, 13b to circuits in an ensuing stage. The switches 27a, 27b are connected to the upper sides as viewed in Fig. 9, whereby input terminals of the reproducing amplifiers 20a, 20b are grounded, and output terminals of the recording amplifiers 21a, 21b are connected to the heads 13a, 13b, respectively. The switches 27c, 27d are short-circuited, with the result that the recording amplifiers 21a, 21b are connected to the rotary transformer 23. Furthermore, the switches 28a, 28b are short-circuited, and the switch 28c is opened. As a result, the recording amplifier 25 is connected to the rotary transformer 23, while input terminals of the reproducing amplifiers 22a, 22b are grounded. In this state, the recording current is supplied to the recording amplifiers 21a, 21b inside the rotating drum 22 via the recording amplifier 25 and the rotary transformer 23. After being amplified by the recording amplifiers 21a, 21b, the recording current is applied to the heads 13a, 13b for the standard-speed mode, whereby video information indicated by the recording current is magnetically recorded on the track for the standard-speed mode of the magnetic tape 2.

At the time of reproduction in the standard-speed mode, the switches 26a, 26b, 26c, 26d remain in the aforementioned state of contact, and the switches 27a, 27b are respectively changed over to contact the lower sides in the drawing (i.e., in the opposite direction to the one for recording).

The switches 28a, 28b, 28c are also connected in an opposite manner to that for recording. Here, a weak reproducing current reproduced from the magnetic tape 2 by means of the video heads 13a, 13b is amplified by the reproducing head amplifiers 20a, 20b, and is inputted to the head amplifiers 22a, 22b inside the fixed drum 24 via the rotary transformer 23. The reproducing current is amplified by the reproducing amplifiers 22a, 22b. Then, a video signal corresponding to each field is synthesized by the field switch 29 for switching the signal for each field, and the reproducing current is outputted as a continuous reproduced video signal at a predetermined level.

In addition, at the time of recording in the triple-speed mode, the switches 26a, 26b, 26c, 26d are changed over to the heads 13c, 13d side, and the same operation as at the time of the aforementioned recording in the standard-speed mode is carried out.

At the time of reproduction in the triple-speed mode, the switches 26a, 26b, 26c, 26d are changed over to the heads 13c, 13d side, and the same operation as at the time of the aforementioned reproduction in the standard-speed mode is carried out.

It should be noted that electric power for driving the switches 26a, 26b, 26c, 26d,27a, 27b, 27c, 27d in the rotating drum 11 as well as the reproducing head amplifiers 20a, 20b and the recording amplifiers 21a, 21b is supplied from a power supply slip ring and a power supply brush provided on a shaft (not shown) of the rotating drum 11. The reason for this is that since the amount of current consumed by the circuits incorporated in the rotating drum 11 becomes large in the vicinity of 100 mA, it is virtually impossible to receive the supply of electric current from the outside through the electromagnetic coupling of the rotary transformer 23.

The conventional rotating magnetic head is arranged as described above. If attention is focused on a method of driving the same, it can be said that its format is of the type in which the tape speed is changed in correspondence with the standard-speed mode and the triple-speed mode, and the recording track width is also changed. Accordingly, it has been necessary to add heads suitable for the respective track widths.

In addition, referring to Fig. 5, if attention is focused on the fact that the magnetic tape 2 is wrapped nearly a half revolution around the rotating drum 1, when the head 3b is operative, the head 3c for the triple-speed mode, which is inoperative and is unnecessary for magnetic recording/reproduction at the present time, is also in contact with the magnetic tape 2. Generally, since the head is provided in such a manner that its tip projects by 40 µm or thereabouts from an outer peripheral surface of the rotating drum 1, if, for instance, the head 3c is brought into contact with the magnetic tape 2, the magnetic tape 2 is hit by the head 3c. This "tape hitting" imparts vibrations to the magnetic tape 2. These vibrations take place in the three directions of X-, Y-, and Z-axes that are perpendicular to each other. Among these vibrations, those occurring in the tape traveling direction (X-axis) cause velocity modulation of the reproduced signal when the signal recorded on the magnetized magnetic tape 2 is reproduced, with the result that the phenomenon of jitter conspicuously appears in the reproduced image.

It goes without saying that the tape hitting is also caused by the head 3b being operated, but it can be considered that this tape hitting is unavoidable.
Nevertheless, this problem -- the fact that the unnecessary head 3c not being operated hits the magnetic tape 2 at an additional position and the vibrations are imparted to the head 3b via the magnetic tape 2 -- - also takes place in the head assembly shown in Fig. 5 or 7 (this problem does not take place in a single-type head). Conventionally, it has been impossible to prevent this problem.

In addition, in the case of the latter composite four-head type of the aforementioned two examples, the pair of heads 13a, 13d or 13b, 13c are arranged into one block, so that the effect of tape hitting by an adjacent head is slightly less than in the case of the example shown in Fig. 5. However, in order to cause a magnetic tape 12 to be brought into contact with gap portions ga, gd uniformly and stably, it is necessary to increase the accuracy of the curvature of a sliding surface of the head as well as the accuracy with which the head is mounted on the rotating drum 11, thereby rendering the manufacturing difficult. Unless these accuracies are secured, trouble occurs on the surface of contact between the head and the magnetic tape 12, and the amount of loading and staining of the head becomes far greater than in the case of the single-head type.

In addition, the four heads consisting of two separate pairs, as shown in Fig. 9, are independently switched over and driven, respectively. That is, these heads are switched over in accordance with the standard-speed mode and the triple-speed mode and are switched over depending on the recording and reproducing modes. For this reason, the configuration of the driving circuit becomes complicated, and the amount of current consumed inside the rotating drum 11, in particular, becomes large.

Furthermore, there has been an additional problem in that a rise in manufacturing cost is entailed if an attempt is made to accurately maintain the gap-to-gap distance of 370 µm, as shown in Fig. 8.

Accordingly, it is a primary object of the present invention to provide a rotating magnetic head assembly which makes it possible to reduce trouble occurring on the surface of contact between the head assembly and a magnetic tape and reduce jitter, thereby overcoming the above-described drawbacks of the conventional art.

It is another object of the present invention to provide a rotating magnetic head assembly which makes it possible to reduce the manufacturing cost of the head assembly and simplify the arrangement of a driving circuit therefor.

This objects are achieved by a rotating magnetic head assembly having the features of claim 1.

The invention is further developed by the features of the subclaims.

The rotating drum rotates at a predetermined speed about an axis forming a predetermined angle with respect to a longitudinal direction of a magnetic tape in the same way as a conventional rotating drum.

The head unit is a unit disposed on an outer periphery of the rotating drum and has an arrangement which can be called a composite head. This head unit is brought into contact with the magnetic tape while sliding as the rotating drum rotates.

The head unit has the following features.

The first feature to be noted is that the head unit comprises a plurality of head chips each formed of a magnetic substance.

Each of the head chips has a gap of a predetermined width. This gap is used for recording a recording current supplied, by converting the recording current into magnetic flux and by magnetizing the magnetic tape, by means of the driving circuit (which will be described later) as the winding is energized. The gap is also used for picking up the magnetization as magnetic flux so as to convert it into a reproducing current by means of the winding. A plurality of head chips used in the present invention are disposed in close contact with each other in the widthwise direction of the gaps such that the gaps each having the above-described arrangement will be aligned on a straight line.
Accordingly, if attention is focused on a single head chip, a gap of a certain width is present, and if attention is focused on arbitrary adjacent ones of the plurality of head chips, a synthetic gap having a total width consisting of gap widths peculiar to the respective head chips is present. In the present invention, such a single or synthetic gap width is set in such a manner as to respectively correspond to the track width for which recording or reproduction is to be effected.

Another feature of the head unit to be noted is the winding. The windings are provided in the same number as that of the head chips. Each winding is wound around each head chip. Accordingly, when the recording current is supplied to the winding, magnetic flux is produced at the gap of the head chip, thereby effecting magnetic recording on the magnetic tape. Conversely, the magnetization of the magnetic tape induces magnetic flux at the gap of the head chip, and this magnetic flux is converted into the reproducing current by means of the winding.

A second important feature of the present invention is the driving circuit.

The driving circuit per se is already known as a means for driving the head in order to effect the recording and reproducing operation. The driving circuit of the present invention, however, significantly differs from a conventional one in terms of the selection of a head chip.

That is, in the driving circuit of the present invention, the winding, and hence the head chip concerning that winding, are changed over in correspondence with the track width for which recording or reproduction is to be effected.

First, when the track to be recorded or reproduced is a width equal to the gap of a single head chip, the driving circuit is operated such that the recording current is supplied to the winding wound around that head chip, or the reproducing current is fetched therefrom.

In addition, when the track to be recorded or reproduced is a width equal to the synthetic gap width of adjacent ones of the plurality of head chips, similar operations are effected with respect to that synthetic gap.

The following is a summary of the operation to be realized by the arrangement of the present invention.

Namely, when recording is to be effected on a track having a width equal to a single gap by using the single gap of a single head chip, the recording current is supplied to a corresponding winding through the selectively supplying operation of the driving circuit, thereby effecting a recording.

During reproduction, on the other hand, the reproducing current obtained as a result of being picked up by the single gap concerned is fetched by the driving circuit via the winding.

In addition, during recording by using the synthetic gap of adjacent ones of the plurality of head chips, the plurality of windings respectively wound around the adjacent ones of the head chips are selected, and information is recorded on the track by means of the magnetic flux produced by the synthetic gap.

During reproduction, on the other hand, the reproducing current obtained as a result of being picked up by the synthetic gap concerned is fetched by the driving circuit via the windings.

Accordingly, in accordance with the present invention, since recording and reproduction are possible by using integral head units through the selection of the windings, the change of the track width can be effected readily without involving any mechanical selection. In addition, it is possible to reduce jittering by eliminating unneccessry tape hitting.

Furthermore, trouble of contact is unlikely to occur in the vicinity of a portion of contact between the head and the magnetic tape. This is attributable to the fact that the gap is less susceptible to loading and staining since the gaps are arranged rectilinearly in one head unit.

As a specific form of the present invention, it is possible to adopt an arrangement in which two head chips are used, and the synthetic gap width is set to an integer-fold a single gap width of one head chip. This integer indicates the ratio of the track width of the single gap to track width of the synthetic gap. For instance, the case where this integer is 3 corresponds to the case where the track width of the single gap is 19 µm and the track width of the synthetic gap is 58 µm. This is the relationship between the aforementioned triple-speed mode and the standard-speed mode. In other words, the changeover of recording density can be easily realized.

In addition, respective two head units, for instance, are arranged to form pairs, and these pairs of head units are disposed symmetrically about the axis of the rotating drum. The adhesion of the plurality of head chips is effected by, for instance, one or more bonding layers. In this case, if the thickness of the bonding layer is included in setting the ratio of the gap width, an accurate track width can be realized.

As a more detailed configuration of the driving circuit, it is possible to consider one having a head chip changeover switch and a recording/reproduction changeover switch.

The former switch is used to selectively change over the winding and the head chip to be operated, by changing over the connection of the windings. Specifically, in the operation of a single gap, the winding corresponding to this single gap is selected, while in the operation of a synthetic gap, a series connection of the plurality of corresponding windings is selected.

The latter switch is used for selectively changing over the recording operation and the reproducing operation. In other words, the switching is effected in such a manner that, during recording, the recording current is supplied to the winding or the series connection of windings thus selected by the head chip changeover switch and, during reproduction, the reproducing current is fetched therefrom.

It should be noted that the driving circuit may be provided with a field switch which is switched over at a predetermined cycle so as to analyze for each track the recording current recorded by the respective pair of head units and to synthesize the reproducing current for each track reproduced.

The above and other objects, features and advantages of the present invention will become more apparent from the following detailed description of the invention when read in conjunction with the accompanying drawings.
Fig. 1 is a top plan view schematically illustrating a rotating magnetic head assembly in accordance with a preferred embodiment of the present invention, particulary showing an arrangement of head units with respect to a rotating drum;
Fig. 2 is a perspective view illustrating an arrangement of a head unit in accordance with the embodiment shown in Fig. 1;
Fig. 3 is an exploded perspective view illustrating the operation of assembling the head unit shown in Fig. 2, particularly the operation of bonding head chips in close contact with each other;
Fig. 4 is a circuit diagram illustrating a configuration of a driving circuit in the embodiment shown in Fig. 1;
Fig. 5 is a top plan view schematically illustrating an example of arrangement of a conventional rotating magnetic head assembly;
Fig. 6 is a perspective view illustrating an arrangement of a head in the conventional example shown in Fig. 5;
Fig. 7 is a top plan view schematically illustrating another example of arrangement of a conventional rotating magnetic head assembly;
Fig. 8 is a perspective view illustrating an arrangement of a head in the conventional example shown in Fig. 7; and
Fig. 9 is a circuit diagram illustrating a configuration of a driving circuit in the conventional example shown in Fig. 7.

### DESCRIPTION OF THE PREFERRED EMBODIMENTS

Referring now to the accompanying drawings, a detailed description will be given of the preferred embodiments of the present invention.

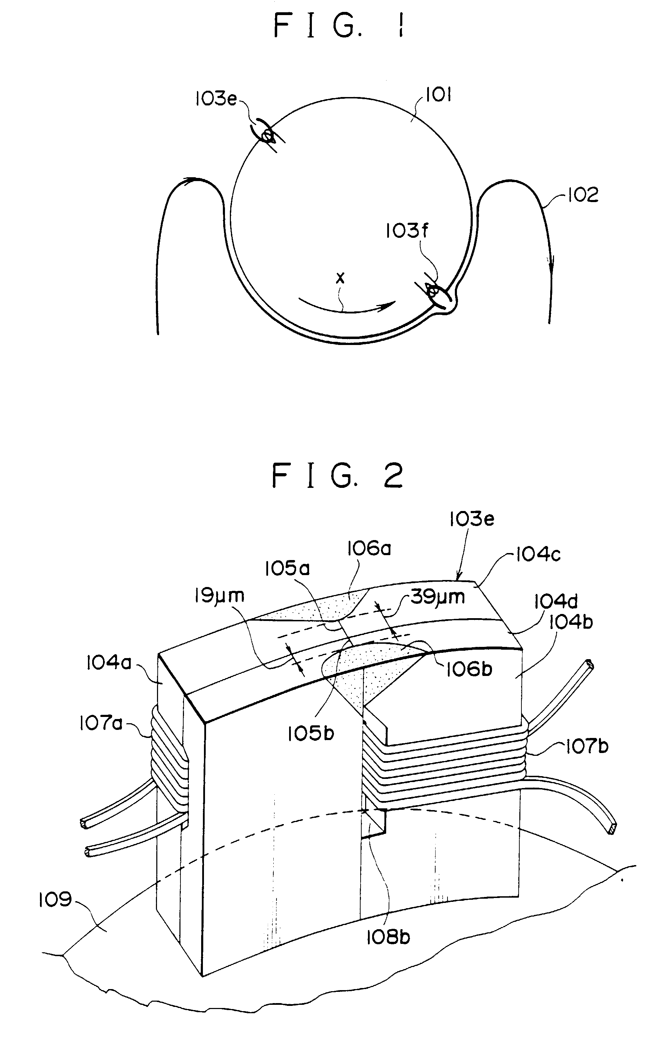

Fig. 1 illustrates an arrangement of heads in a rotating magnetic head assembly in accordance with an embodiment of the present invention. In this embodiment, head units 103e, 103f are disposed on a peripheral surface of a rotating drum 101 at mutually opposed positions with respect to an axis of the rotating drum 101, and a magnetic tape 102 is wrapped nearly a half revolution around the rotating drum 101. In this state, recording and reproduction are effected in a standard-speed mode and a triple-speed mode.

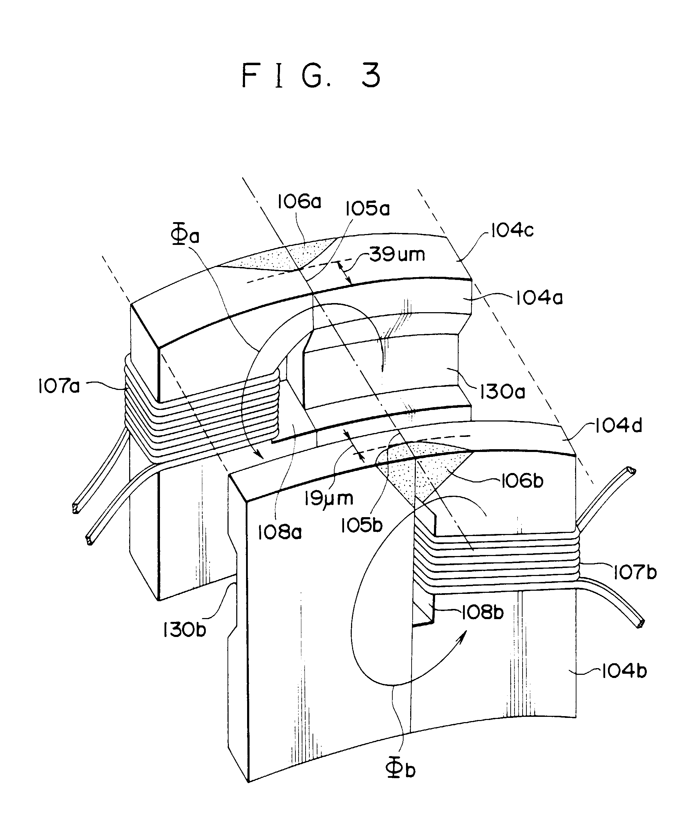

Fig. 2 is a perspective view illustrating a detailed arrangement of the head units 103e, 103f in accordance with this embodiment, and Fig. 3 is an exploded perspective view thereof. In Figs. 2 and 3, head chips 104a, 104b are typically formed of single crystal ferrite which are respectively provided with sliding surfaces 104c, 104d that are brought into contact with the magnetic tape 102. The head chips 104a, 104b are further provided with head gaps 105a, 105b adapted to effect recording and reproducing operation directly on the magnetic tape 102. In this embodiment, the width of one head gap 105a is set at 39 µm and the width of the other head gap 105b at 19 µm, the total gap width being 58 µm. Glass members 106a, 106b are designed to reinforce the joining of head unit portions at the gaps 105a, 105b and function as a kind of adhesive.

Windings 107a, 107b are wound around the head chips 104a, 104b, respectively. The windings 107a, 107b are wound in such a manner that their wire is threaded through windows 108a, 108b and recesses 130a, 130b provided in the head chips 104a, 104b. A head base 109 which is typically formed of brass is used for fixing the head chips 104a, 104b.

In the assembly of the rotating magnetic head assembly having the above-described arrangement, the two head chips 104a, 104b are superposed on each other with precise alignment so that their gaps 105a, 105b will be rectilinear, as shown in Fig. 3, and are then bonded together. The thickness of the bonding layer at the sliding surfaces is preferably 1 µm or less.

As for the head units 103e, 103f thus constructed, a gap width of 39 µm is formed by one head chip 104a, and a gap width of 19 µm is formed by the other head chip 104b, thereby forming a total gap width of 58 µm, as shown in Fig. 2.

It should be noted that although in the foregoing description the thickness typically approximately 1 µm) of the bonding layer has been ignored, the width of the gap 105a is actually set at 38 µm by subtracting the width of the bonding layer from the aforementioned gap width of 39 µm. When bonding glass is used as the bonding layer in actual fabrication, the thickness of the bonding layer becomes several microns. In that case, the width of the gap 105a may be set to 58 µm - 19 µm - several mµ.

In addition, the curvatures of the sliding surfaces 104c, 104d are desirably equal. To attain this, it suffices if, after the adhesion of the two surfaces, the sliding surfaces 104c, 104d are ground with grinding tape so as to cause their curvatures to become equal.

The head units 103e, 103f constructed as described above are mounted to the rotating drum 101 such that the sliding surfaces 104c, 104d of the head units 103e, 103f project 40 µm from the outer peripheral surface of the rotating drum 101 and at positions in which the head units 103e, 103f are in precisely opposed relationship about the axis of the rotating drum 101. As shown in Fig. 1, the magnetic tape 102 is wrapped nearly a half revolution around the rotating drum 101.

At the time of recording or reproducing in the standard-speed mode, both head chips 104a, 104b are used with a gap width of 39 µm + 19 µm.

Meanwhile, at the time of recording or reproducing in the triple-speed mode, only the head chip 104b is made operative as a head having a gap width of 19 µm.

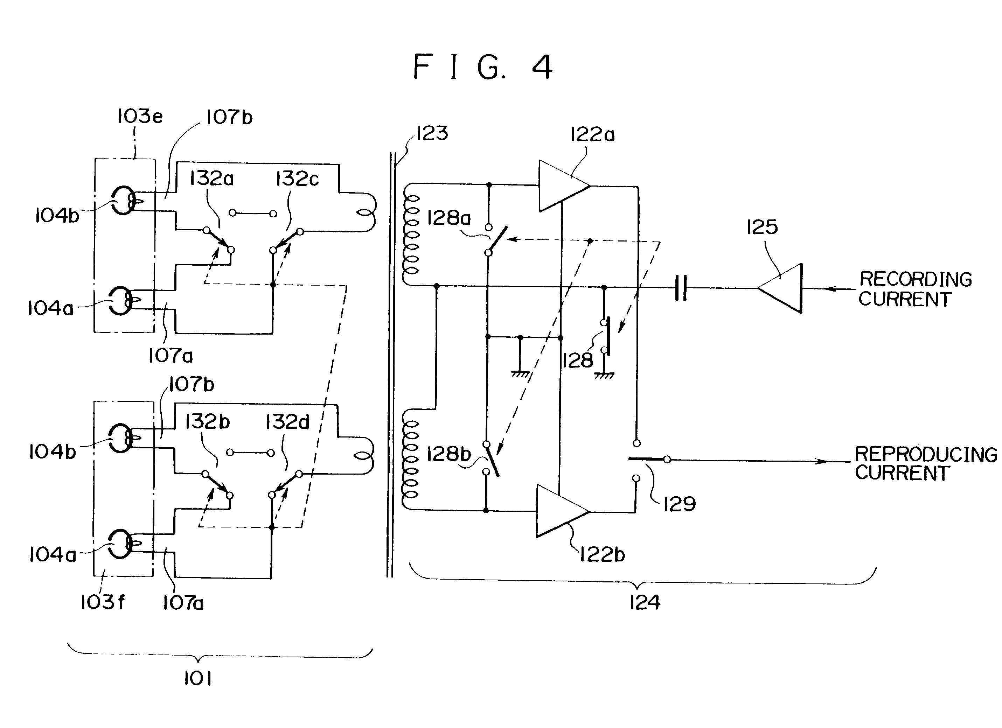

Fig. 4 is a schematic circuit diagram illustrating a configuration of a driving circuit for the rotating magnetic head assembly in accordance with this embodiment.

Since the configuration of a rotating drum 124 is identical with that of the prior art shown in Fig. 9, a detailed description thereof will be omitted. The difference of this embodiment with respect to the prior art is that switches 132a, 132b, 132c, 132d are provided for rendering the head width variable in an equivalent manner by changing over the windings 107a, 107b.

Next, a description will be given of the operation of the configuration shown in Fig. 4.

At the time of recording in the triple-speed mode, the switches 132a, 132b, 132c, 132d are respectively changed over to contact the upper sides as viewed in Fig. 4, causing only one winding 107b to be connected to a rotary transformer 123. At this time, the other winding 107a is open. As a result, only the gap 105b becomes operative.

At the same time, switches 128a, 128b are closed, and a switch 128 is opened. As a result, a recording amplifier 125 is connected to the rotary transformer 123.

Consequently, a recording current amplified by the recording amplifier 125 is supplied to the winding 107 via the rotary transformer 123, the switch 132c or 132d and the switch 132d or 132b. The gap 105b of the head chip 104b becomes operative due to this recording current, thereby recording a video signal on the magnetic tape 102. That is, recording is effected only with the head having a head width of 19 µm and on a similarly 19 µm-wide track.

At the time of reproduction in the triple-speed mode, the switches 132a, 132c, 132b, 132d remain in the same state of contact as at the time of recording, while the switches 128a, 128b, 128 are set in an oppositely contacting state.

As a result, a weak reproducing current picked up by the head 104b from the magnetic tape 102 is inputted to a reproducing amplifier 122a or 122b via the switch 132a or 132b, the switch 132c or 132d, and the rotary transformer 123. This reproducing current amplified by the reproducing amplifier 122a or 122b selects a field being presently reproduced and is synthesized by means of a switch 129 for changing over a signal for each field, with the result that a frame video signal of a predetermined level, which is continuous in terms of time, is outputted from the switch 129. At this time as well, since the winding 107a is open, the reproducing current picked up by the head 104a is not applied to the rotary transformer 123.

In addition, at the time of recording in the standard-speed mode, the switches 132a, 132c, 132b, 132d are respectively changed over to contact the lower sides as viewed in Fig. 4, while the switches 128a, 128b, 128 are set in the same state of contact as at the time of recording in the triple-speed mode.

Consequently, the operation is effected in the same way as at the time of recording in the triple-speed mode, so that recording is effected on a track with a width threefold that for recording in the triple-speed mode. That is, if it is assumed that the directions of the threading of the windings 107b, 107a are identical so that the magnetic flux Φa and magnetic flux Φb of the head chips 104b, 104a will be added together, the head units 103e, 103f operate as a head with a head width of 19 µm + 39 µm.

At the time of reproduction in the standard-speed mode, the switches 132a, 132c, 132b, 132d are respectively changed over to contact the lower sides as viewed in Fig. 4, while the switches 128a, 128b, 128 are changed over to contact the opposite sides to those for the recording. Since the directions of the threading of the windings 107b, 107a are arranged in such a manner that the magnetic flux Φa and the magnetic flux Φb will be added together, the head unit 103a and 103f operate as a head with a head width of 19 µm + 39 µm.

As described above, in accordance with this embodiment, the number of heads disposed on the rotating drum 101 is halved. In addition, when the head 103f is in sliding contact with the magnetic tape 102, as shown in Fig. 1, the other head 103e is not in contact with the tape 102, so that tape hitting does not occur. The same holds true of the opposite case.

In addition, since the gap is rectilinear, the magnetic tape 102 is brought into contact with the gap uniformly and stably, thereby reducing the sliding noise. As a result, jitter is reduced.

Furthermore, since the number of heads is halved, the processing of the rotating drum 101 and the mounting operation that are required at the time of mounting the heads on the rotating drum 101 can be halved.

Moreover, the configuration of the driving circuit becomes simplified. In particular, since the internal electronic circuits (switch 132a and the like) of the rotating drum 101 can be constituted by a MOSIC with low power consumption, it becomes possible to adopt the power source supplying system based on the electromagnetic coupling of the rotary transformer 132.

It should be noted that although in the above-described embodiment the two head chips having gap widths of 39 µm and 19 µm, respectively, are superposed on each other, the gap widths are not restricted to these dimensions in the present invention.

In addition, the number of head chips superposed is not restricted to two, and by using, for example, three head chips, the head gap width may be set to three types so that three different modes, including the standard-speed and triple-speed recording/reproducing modes and a special reproducing mode, can be used.

Furthermore, as for the positions of the windings, the windings may be disposed at other positions on condition that closed magnetic circuits are formed and magnetic flux that does not leak can be produced. In addition, at the time when two ferrite cores constituting each of the head chips are bonded together by using the position of the gap as a reference, the ferrite cores may be caused to adhere to each other by means of sputtering or other similar method without using an adhesive.

The driving circuit shown in Fig. 4 is one example among the various circuits that are conceivable, but the present invention is not restricted to the same. Insofar as the directions of the threading of the windings can be set in such a manner that the magnetic flux can be added together and the heads can be changed over, the operation similar to that of the above-described embodiment can be realized, and a similar advantage can be obtained.

To sum up, the rotating magnetic head assembly in accordance with the present invention comprises composite heads in which a plurality of head chips having different gap widths are superposed on each other with the gap portions aligned with each other. Accordingly, by operating one or a plurality of head chips in correspondence with the operation mode, it is possible to effect a changeover to a head width (and hence a track width) adapted to each operation mode. In consequence, it is possible to eliminate a cross-talk component from adjacent tracks, so that the recording and reproducing operation can be effected with an excellent S/N ratio.

In addition, since the number of heads can be reduced to half or less in comparison with the conventional composite head system, tape hitting by heads other than the one in operation does not occur. In addition, since the gap portion is formed in a rectilinear configuration, it becomes readily possible to maintain the state of contact between the gap and the magnetic tape uniformly and stably. As a result, the sliding noise can be halved, thereby making it possible to effect recording and reproduction with high picture quality and a small amount of jitter.

Moreover, since the gap width can be changed over to the standard-speed mode by simply changing over the connection of the winding, the circuit configuration becomes simplified. As a result, advantages can be obtained in that the amount of current consumed can be saved, and that a driving current can be supplied via a rotary transformer to the circuit accommodated in the rotating drum.

Head chips having gaps of mutually different widths are laminated in close contact with each other in the widthwise direction of the gaps, and are mounted on a rotating drum. Windings respectively wound around the head chips are selectively operated by a driving circuit. By means of this selection, one or adjacent ones of the plurality of windings are used during recording, wherein a recording current is supplied to the winding selected, while during reproduction a reproducing current is fetched from the winding selected. An effective gap width contributing to recording and reproduction is a total of the gap widths of the head chips around which the windings thus selected are wound. The track width on the magnetic tape is determined by the effective gap width. Accordingly, the track width is variably set as the windings are selectively driven.

## Claims

1. A rotating magnetic head assembly comprising
a) a rotating drum (101) for rotating at a predetermined speed about an axis forming a predetermined angle with respect to a longitudinal direction of a magnetic tape (102),
b) at least one head unit (103e, 103f) disposed on an outer periphery of said rotating drum (101) in such a manner as to brought into contact with said magnetic tape (102) while sliding when said rotating drum (101) rotates, said head unit (103e, 103f) including
b1) a plurality of head chips (104a, 104b) disposed in close contact with each other in widthwise direction of gaps (105a, 105b) so that said gaps (105a, 105b) become continuous, said head chips (104a, 104b) being arranged in such a manner that a width of said gaps (105a, 105b), singly or in a state in which at least two adjacent gaps (105a, 105b) are synthesized, corresponds to a predetermined track width, and each of said head chips (104a, 104b) being formed of a magnetic substance,
b2) a plurality of windings (107a, 107b), respectively, wound around said head chips (104a, 104b) in such a manner that magnetic recording is effected on said magnetic tape (102) by causing said gap (105a, 105b) of each of said head chips (104a, 104b) to produce magnetic flux (φₐ, φ_{b}) by supplying a recording current thereto, and that said magnetic flux (φₐ, φ_{b}) induced by said gap (105a, 105b) of each of said head chips (104a, 104b) by a magnetization of said magnetic tape (102) is converted into an electric current and is outputted as a reproducing current,
c) a driving unit such arranged that during recording said recording current is supplied to, and during a reproduction said reproducing current is derived from a winding wound around a single one of said plurality of head chips (104a, 104b) when said predetermined track width concerning which recording or reproduction is to be effected corresponds to a gap width of said single one of said plurality of head chips (104a, 104b), or said plurality of windings (107a, 107b), respectively wound around adjacent ones of plurality of head chips (104a, 104b) when said track width concerning which recording or reproduction is to be effected corresponds to a synthesized gap width of said adjacent ones of said plurality of head chips (104a, 104b), and
d) said driving unit comprises a driving circuit adapted to supply said recording current to said plurality of windings (107a, 107b) during recording and to derive said reproducing current from said plurality of windings (107a, 107b) during reproduction, said driving circuit including
head chip changeover switch means (132a-d) arranged in such a manner as to select
either a series connection of said plurality of windings (107a, 107b), respectively, wound around adjacent ones of said plurality of head chips (104a, 104b) when said track width corresponds to a synthesized gap width of said adjacent ones of said plurality of head chips (104a, 104b),
or a winding wound around a single one of said plurality of head chips (104a, 104b) when said track width determined as a specification of recording or reproducing corresponds to a gap width of said single one of said plurality of said head chips (104a, 104b), characterized in said plurality of windings (107a, 107b), respectively, wound around said plurality of head chips (104a, 104b) being opened, except for said winding wound around said single one of said plurality of head chips (104a, 104b).

2. A rotating magnetic head assembly according to claim 1, wherein the number of said head chips (104a, 104b) is two, and the synthesized gap width of said two head chips is n-fold (n: integer) a single gap width of one of said head chips.

3. A rotating magnetic head assembly according to claim 2, wherein n = 3.

4. A rotating magnetic head assembly according to claim 1, 2 or 3, wherein the respective two head units (103e, 103f) form pairs, and said pairs of head units (103e, 103f) are disposed symmetrically about the axis of said rotating drum (101).

5. A rotating magnetic head assembly according to claim 1 or 4, wherein said plurality of head chips (103e, 103f) are adhered to each other by means of one or more bonding layers.

6. A rotating magnetic head assembly according to claim 4 or 5, wherein the thickness of said bonding layer is included in setting a ratio of gap widths of said head chips (104a, 104b).

7. A rotating magnetic head assembly according to one of the preceding claims, wherein said driving unit further comprises recording/reproducing changeover switch means (128a-c) which are changed over in such a manner as to supply said recording current to an independently connected winding or series-connected windings via said head chip changeover switch means (132a-d) during recording, and to derive said reproducing current from said independently connected winding or said series-connected winding via said head chip changeover switch means (132a-d) during reproduction.

8. A rotating magnetic head assembly according to claim 7, wherein said driving circuit has a field switch (129) which is switched over at a predetermined cycle so as to analyze for each track the recording current recorded by respective said pair of head units and to sythesize the reproducing current for each track reproduced.

## Patentansprüche

1. Rotierender Magnetkopf-Zusammenbau, welcher aufweist:
a) eine Drehtrommel **(101)** zur Drehung mit einer vorbestimmten Drehzahl um eine Achse, welche einen vorbestimmten Winkel mit Bezug auf eine Längsrichtung eines Magnetbands **(102)** bildet,
b) mindestens eine Kopfeinheit **(103e**, **103f)**, welche auf einem Außenumfang der Drehtrommel **(101)** in einer solchen Weise angeordnet ist, um sie mit dem Magnetband **(102)** in Kontakt zu bringen, während des Gleiten, wenn sich die Drehtrommel **(101)** dreht, wobei die Kopfeinheit **(103e**, **103f)** aufweist:
b1) eine Vielzahl von Kopfchips **(104a, 104b),** welche miteinander im engen Kontakt in Breitenrichtung der Spalte **(105a, 105b)** angeordnet sind, so daß die Spalte **(105a, 105b)** durchgehend werden, wobei die Kopfchips **(104a, 104b)** in einer solchen Weise angeordnet werden, daß eine Breite der Spalte **(105a, 105b)** einzeln oder in einem Zustand, in welchem mindestens zwei benachbarte Spalte **(105a, 105b)** entsprechend einer vorbestimmten Spurbreite künstlich zusammengesetzt werden, und jeder der Kopfchips **(104a, 104b)** aus einer magnetischen Substanz erzeugt ist,
b2) eine Vielzahl von Wicklungen **(107a, 107b)**, welche jeweils in einer solchen Weise um die Kopfchips **(104a, 104b)** gewickelt sind, daß das magnetische Aufzeichnen auf dem Magnetband (**102**) bewirkt wird, indem der Spalt (**105a, 105b**) jedes der Kopfchips (**104a, 104b**) veranlaßt wird, durch Zuführen eines Aufzeichnungsstroms einen magnetischen Fluß (Φₐ, Φ_{b}) zu erzeugen, und daß der magnetische Fluß (Φₐ, Φ_{b}), welcher durch den Spalt (**105a, 105b**) jedes der Kopfchips (**104a, 104b**) durch eine Magnetisierung des Magnetbands (**102**) induziert wird, in einen elektrischen Strom umgewandelt und als ein Wiedergabestrom ausgegeben wird,
c) eine Ansteuereinheit, welche so angeordnet ist, daß während der Aufzeichnung der Aufzeichnungsstrom zugeführt wird und während einer Wiedergabe der Wiedergabestrom von einer Wicklung abgeleitet wird, welche um einen der Vielzahl von Kopfchips (**104a, 104b**) gewickelt ist, wenn die vorbestimmte Spurbreite, bei welcher die Aufzeichnung oder die Wiedergabe auszuführen ist, einer Spaltbreite des einen der Vielzahl von Kopfchips (**104a, 104b**) oder der Vielzahl von Wicklungen (**107a, 107b**) entspricht, welche jeweils um den benachbarten einen der Vielzahl von Kopfchips (**104a, 104b**) gewickelt ist, wenn die Spurbreite, bei welcher die Aufzeichnung oder die Wiedergabe auszuführen ist, einer künstlich zusammengesetzten Spaltbreite des benachbarten einen der Vielzahl von Kopfchips (**104a, 104b**) entspricht, und
d) die Ansteuereinheit eine Ansteuerschalteinrichtung aufweist, welche angepaßt ist, den Aufzeichnungsstrom der Vielzahl von Wicklungen (**107a, 107b**) während der Aufzeichnung zuzuführen und während der Wiedergabe den Wiedergabestrom von der Vielzahl von Wicklungen (**107a, 107b**) abzuleiten, wobei die Ansteuerschalteinrichtung aufweist:
- eine Kopfchip-Wechselschalteinrichtung (**132a-d**), welche in einer solchen Weise angeordnet ist, um auszuwählen:
- entweder eine Reihenverbindung der Vielzahl von Wicklungen (**107a, 107b**), welche jeweils um einen der Vielzahl von Kopfchips (**104a, 104b**) gewickelt ist, wenn die Spurbreite einer künstlich zusammengesetzten Spaltbreite der benachbarten einen der Vielzahl von Kopfchips (**104a, 104b**) entspricht,
- oder eine Wicklung, welche um einen der Vielzahl von Kopfchips (**104a, 104b**) gewickelt ist, wenn die Spurbreite, welche als eine Spezifikation der Aufzeichnung oder der Wiedergabe bestimmt ist, einer Spaltbreite des einen der Vielzahl von Kopfchips (**104a, 104b**) entspricht,
**gekennzeichnet durch** eine Vielzahl von Wicklungen (**107a, 107b**), welche jeweils um die Vielzahl von Kopfchips (**104a, 104b**) gewickelt sind, welche offen sind, mit Ausnahme der Wicklung, welche um einen einen der Vielzahl von Kopfchips (**104a, 104b**) gewickelt ist.

2. Rotierender Magnetkopf-Zusammenbau gemäß Anspruch 1, wobei die Anzahl der Kopfchips (**104a, 104b**) zwei beträgt und die künstlich zusammengesetzte Spaltbreite der zwei Kopfchips das n-fache (n ist eine Ganzzahl) einer einzelnen Spaltbreite eines der Kopfchips ist.

3. Rotierender Magnetkopf-Zusammenbau gemäß Anspruch 2, wobei n = 3 ist.

4. Rotierender Magnetkopf-Zusammenbau gemäß Anspruch 1, 2 oder 3, wobei die jeweiligen zwei Kopfeinheiten (**103e, 103f**) Paare ausbilden und die Paare von Kopfeinheiten (**103e, 103f**) symmetrisch um die Achse der Drehtrommel (**101**) angeordnet sind.

5. Rotierender Magnetkopf-Zusammenbau gemäß Anspruch 1 oder 4, wobei die Vielzahl der Kopfchips (**103e, 103f**) miteinander mittels einer oder mehrerer Klebschichten verklebt sind.

6. Rotierender Magnetkopf-Zusammenbau gemäß Anspruch 4 oder 5, wobei die Dicke der Klebschicht in eine Einstellung eines Verhältnisses der Spaltbreiten der Kopfchips (**104a, 104b**) einbezogen ist.

7. Rotierender Magnetkopf-Zusammenbau gemäß einem der vorhergehenden Ansprüche, wobei die Ansteuereinheit ferner Aufzeichnungs-/Wiedergabe-Wechselschalteinrichtungen (**128a-c**) aufweist, welche in einer solchen Weise umgeschaltet werden, um den Aufzeichnungsstrom zu einer unabhängig verbundenen Wicklung oder seriell verbundenen Wicklungen über die Kopfchip-Wechselschalteinrichtungen (**132a-d**) während der Aufzeichnung zuzuführen und den Wiedergabestrom von der unabhängig verbundenen Wicklung oder der seriell verbundenen Wicklung über die Kopfchip-Wechselschalteinrichtungen (**132a-d**) während der Wiedergabe abzuleiten.

8. Rotierender Magnetkopf-Zusammenbau gemäß Anspruch 7, wobei die Ansteuerschalteinrichtung einen Feldschalter (**129**) aufweist, welcher in einem vorbestimmten Zyklus umgeschaltet wird, um so für jede Spur den Aufzeichnungsstrom zu analysieren, welcher durch das jeweilige Paar von Kopfeinheiten aufgezeichnet ist und um den Wiedergabestrom für jede wiedergegebene Spur künstlich zusammenzusetzen.

## Revendications

1. Montage de tête magnétique rotative comprenant
a) un tambour rotatif (101), destiné à tourner à une vitesse prédéterminée autour d'un axe faisant un angle prédéterminé par rapport à une direction longitudinale d'une bande magnétique (102),
b) au moins une unité de tête (103e, 103f), disposée sur une périphérie externe dudit tambour rotatif (101), de telle manière à être amené en contact avec ladite bande magnétique (102) en coulissant pendant que tourne ledit tambour rotatif (101), ladite unité de tête (103e, 103f) comportant
b1) une pluralité de puces de tête (104a, 104b), disposées en contact étroit entre elles dans le sens de la largeur d'entrefers (105a, 105b), de façon que lesdits entrefers (105a, 105b) deviennent continus, lesdites puces de tête (104a, 104b) étant agencées d'une manière telle qu'une largeur desdits entrefers (105a, 105b), séparément ou dans un état dans lequel au moins deux entrefers adjacents (105a, 105b) sont synthétisés, correspond à une largeur de piste prédéterminée, et chacune desdites puces de tête (104a, 104b) étant formée d'une substance magnétique,
b2) une pluralité d'enroulements (107a, 107b), bobinés respectivement autour desdites puces de tête (104a, 104b), d'une manière telle qu'un enregistrement magnétique est effectué sur ladite bande magnétique (102) en générant un flux magnétique (φₐ, φ_{b}) par ledit entrefer (105a, 105b) de chacune desdites puces de tête (104a, 104b), en lui délivrant un courant d'enregistrement, et que ledit flux magnétique (φₐ, φ_{b}) induit par ledit entrefer (105a, 105b) de chacune desdites puces de tête (104a, 104b), par une magnétisation de ladite bande magnétique (102), est converti en un courant électrique, et est délivré en sortie en tant que courant de reproduction,
c) une unité de commande agencée de façon que pendant l'enregistrement ledit courant d'enregistrement est délivré, et pendant une reproduction, ledit courant d'enregistrement provient d'un enroulement bobiné autour d'une puce de tête unique parmi ladite pluralité de puces de tête (104a, 104b) lorsque ladite largeur de piste prédéterminée relative à l'enregistrement ou à la reproduction qui doit être effectué, correspond à une largeur d'entrefer de ladite puce de tête unique parmi ladite pluralité de puces de tête (104a, 104b), ou ladite pluralité d'enroulements (107a, 107b) bobinés respectivement autour des puces de tête adjacentes de ladite pluralité de puces de tête (104a, 104b), lorsque ladite largeur de piste relative à l'enregistrement ou à la reproduction qui doit être effectué, correspond à une largeur d'entrefer synthétisée desdites puces de tête adjacentes de ladite pluralité de puces de tête (104a, 104b), et
d) ladite unité de commande comprend un circuit de commande adapté pour délivrer ledit courant d'enregistrement à ladite pluralité d'enroulements (107a, 107b) pendant l'enregistrement, et pour prélever ledit courant de reproduction de ladite pluralité d'enroulements (107a, 107b) pendant la reproduction, ledit circuit de commande comportant
des moyens de commutation de changement de puce de tête (132a-d), agencés de telle manière pour choisir
soit une connexion en série de ladite pluralité d'enroulements (107a, 107b), bobinés respectivement autour des puces de tête adjacentes de ladite pluralité de puces de tête (104a, 104b), lorsque ladite largeur de piste correspond à une largeur d'entrefer synthétisée desdites puces de tête adjacentes parmi ladite pluralité de puces de tête (104a, 104b),
soit un enroulement bobiné autour d'une seule puce de tête parmi ladite pluralité de puces de tête (104a, 104b), lorsque ladite largeur de piste déterminée en tant que référence d'enregistrement ou de reproduction correspond à une largeur d'entrefer de ladite seule puce de tête parmi ladite pluralité de puces de tête (104a, 104b), caractérisé en ce que ladite pluralité d'enroulements (107a, 107b), bobinés respectivement autour de ladite pluralité de puces de tête (104a, 104b) sont ouverts, à l'exception dudit enroulement bobiné autour de ladite seule puce de tête parmi ladite pluralité de puces de tête (104a, 104b).

2. Montage de tête magnétique rotative selon la revendication 1, dans lequel le nombre desdites puces de tête (104a, 104b) est de deux, et la largeur d'entrefer synthétisée desdites deux puces de tête est de n fois (n: entier) une simple largeur d'entrefer de l'une desdites puces de tête.

3. Montage de tête magnétique rotative selon la revendication 2, dans lequel n = 3.

4. Montage de tête magnétique rotative selon la revendication 1, 2 ou 3, dans lequel les deux unités de tête respectives (103e, 103f) forment des paires, et lesdites paires d'unités de tête (103e, 103f) sont disposées symétriquement par rapport à l'axe dudit tambour rotatif (101).

5. Montage de tête magnétique rotative selon la revendication 1 ou 4, dans lequel ladite pluralité de puces de tête (103a, 103b) sont collées les unes aux autres au moyen d'une ou de plusieurs couches de liaison.

6. Montage de tête magnétique rotative selon la revendication 4 ou 5, dans lequel l'épaisseur de ladite couche de liaison est incluse dans la détermination d'un rapport de largeurs d'entrefer desdites puces de tête (104a, 104b).

7. Montage de tête magnétique rotative selon l'une quelconque des revendications précédentes, dans lequel ladite unité de commande comprend en outre des moyens de commutation de changement d'enregistrement/reproduction (128a-c), qui sont basculés de telle manière à délivrer ledit courant d'enregistrement à un enroulement connecté indépendamment, ou à des enroulements connectés en série, par l'intermédiaire desdits moyens de commutation de changement des puces de tête (132a-d) pendant l'enregistrement, et à prélever ledit courant de reproduction dudit enroulement connecté indépendamment, ou desdits enroulements connectés en série, par l'intermédiaire desdits moyens de commutation de changement des puces de tête (132a-d), pendant la reproduction.

8. Montage de tête magnétique rotative selon la revendication 7, dans lequel ledit circuit de commande comporte un commutateur de champ (129), qui est commuté selon un cycle prédéterminé, de façon à analyser pour chaque piste le courant d'enregistrement enregistré par ladite paire respective d'unités de tête, et à synthétiser le courant de reproduction pour chaque piste reproduite.
